(19) Europäisches Patentamt
European Patent Office
Office européen des brevets

(11) Veröffentlichungsnummer: 0 202 530
B1

(12) EUROPÄISCHE PATENTSCHRIFT

(45) Veröffentlichungstag der Patentschrift: 12.09.90

(51) Int. Cl.[5]: C08K 5/34, C08L 59/04

(21) Anmeldenummer: 86106149.7

(22) Anmeldetag: 06.05.86

# (54) Oxymethylencopolymerisat-Formmassen mit verminderter Formaldehyd-Emission bei der thermoplastischen Verarbeitung.

(30) Priorität: 22.05.85 DE 3518375

(43) Veröffentlichungstag der Anmeldung: 26.11.86 Patentblatt 86/48

(45) Bekanntmachung des Hinweises auf die Patenterteilung: 12.09.90 Patentblatt 90/37

(84) Benannte Vertragsstaaten: AT BE CH DE FR GB IT LI NL SE

(56) Entgegenhaltungen:
EP-A- 0 112 726
DE-A- 3 011 280

Die Akte enthält technische Angaben, die nach dem Eingang der Anmeldung eingereicht wurden und die nicht in dieser Patentschrift enthalten sind.

(73) Patentinhaber: Degussa Aktiengesellschaft, Weissfrauenstrasse 9, D-6000 Frankfurt am Main 1(DE)

(72) Erfinder: Amann, Herbert, Dr. Dipl.-Chem., Greifenhagenstrasse 17, D-6450 Hanau 9(DE)
Erfinder: Morlock, Gerhard, Dr. Dipl.-Chem., Wildaustrasse 3, D-6450 Hanau 9(DE)
Erfinder: Schöla, Egbert, Dr. Dipl.-Chem., Landgraf-Friedrich-Strasse 6, D-6382 Friedrichsdorf(DE)

EP 0 202 530 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Antioxidans enthaltende Oxymethylencopolymerisat-Formmassen mit verminderter Formaldehyd-Emission bei der thermoplastischen Verarbeitung.

Bei der thermoplastischen Verarbeitung von Oxymethylencopolymerisat-Formmassen werden geringe Mengen Formaldehyd freigesetzt. Hierbei kann es sich um gelösten Formaldehyd handeln, der aus der Schmelze und den heißen Formteilen ausgast oder aber um Formaldehyd, der durch thermische Abspaltung gebildet wird. Die Anwendung besonders rationeller Verarbeitungsmethoden ist oft nur bei erhöhter thermischer Belastung der Polymerisatschmelze möglich. Mit zunehmender thermischer Belastung wächst aber die Gefahr der Produktschädigung und damit erhöhter Formaldehyd-Emission. Der freigesetzte Formaldehyd ist in zweierlei Hinsicht unangenehm. Er kann zur Belästigung des Bedienungspersonals führen und die Installation von Absaugeinrichtungen und Absorptionsanlagen zum Schutz der Umwelt notwendig machen. Der emittierte Formaldehyd kann darüberhinaus aber auch Beläge an den Werkzeugen verursachen und dadurch die Oberflächengüte und Maßgenauigkeit der Formteile beeinträchtigen.

Aus DE-A 3 011 280 sind stabilisierte Oxymethylencopolymermassen bekannt, die ein aminsubstituiertes Triazin (z.B. Melamin, Guanamin, Benzoguanamin oder 2,4-Diamino-6-methyl-sym-triazin), ein sterisch gehindertes Phenol sowie eine metallharzige Verbindung enthalten.

Es besteht daher ein dringendes Bedürfnis, die Formaldehyd-Emission bei der thermoplastischen Verarbeitung von Oxymethylencopolymerisat-Formmassen zu vermindern. Durch die erfindungsgemäßen Formmassen wird dieses Bedürfnis befriedigt.

Die erfindungsgemäßen Oxymethylencopolymerisat-Formmassen sind dadurch gekennzeichnet, daß sie zusätzlich an der Oberfläche oder homogen eingemischt mindestens eine Formaldehyd bindende Substanz der Formeln

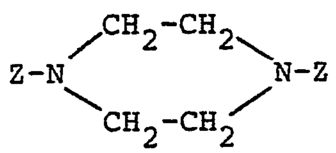 (I),

$$Z{-}NR{-}R'(NRZ)_n{-}RN{-}Z \qquad (II),$$

$$Z{-}NR{-}R''[N(Z){-}R'']_{\sigma}[R'']_p RN{-}Z \qquad (III) \text{ oder}$$

$$Z{-}R'''{-}Z \qquad (IV)$$

enthalten, in denen

Z einen 4,6-Diamino-1,3,5-triazin-2-ylrest,

R Wasserstoff oder einen bis zu 18 Kohlenstoffatome aufweisenden einwertigen gesättigter oder ungesättigten, geradkettigen oder verzweigten aliphatischen Kohlenwasserstoffrest oder einwertigen unsubstituierten oder ein- oder mehrfach durch einen aliphatischen Kohlenwasserstoffrest substituierten cyclopaliphatischen oder aromatischen Kohlenwasserstoffrest,

R' einen bis zu 18 Kohlenstoffatome aufweisenden zwei- bis fünfwertigen gesättigten oder ungesättigten, geradkettigen oder verzweigten aliphatischen Kohlenwasserstoffrest oder zwei- bis fünfwertigen unsubstituierten oder ein- oder mehrfach durch einen aliphatischen Kohlenwasserstoffrest substituierten cycloaliphatischen oder aromatischen Kohlenwasserstoffrest, einen bis zu 18 Kohlenstoffatome aufweisenden zweiwertigen aliphatisch-cycloaliphatischen oder aliphatisch-aromatischen Kohlenwasserstoffrest mit der Struktur -A-B- oder -A-B-A-, in welcher A einen zweiwertigen aliphatischen und B einen zweiwertigen unsubstituierten oder ein- oder mehrfach durch einen aliphatischen Kohlenwasserstoffrest substituierten cycloaliphatischen oder aromatischen Kohlenwasserstoffrest darstellen, oder einen bis zu 18 Kohlenstoffatome aufweisenden zwei- bis fünfwertigen Rest der Struktur -C-X-C-, in welcher C einen mindestens zweiwertigen cycloaliphatischen oder aromatischen Kohlenwasserstoffrest und X einen zweiwertigen geradkettigen oder verzweigten aliphatischen Kohlenwasserstoffrest, -O-, -S- oder $-SO_2-$ darstellen,

R" einen bis zu 12 Kohlenstoffatome aufweisenden zweiwertigen geradkettigen oder verzweigten aliphatischen Kohlenwasserstoffrest,

R"' einen bis zu 12 Kohlenstoffatome aufweisenden zweiwertigen geradkettigen oder verzweigten aliphatischen Kohlenwasserstoffrest oder zweiwertigen cycloaliphatischen oder aromatischen Kohlenwasserstoffrest,

n 0, 1, 2 oder 3,
σ 1, 2 oder 3 und
ρ 0 oder 1
bedeuten.

Die Formaldehyd bindenden Substanzen der Formeln (I) bis (IV) werden zweckmäßigerweise in einer Menge zwischen 0,2 und 50 Gewichtsteilen, vorzugsweise zwischen 0,5 und 10 Gewichtsteilen, auf 1000 Gewichtsteile Oxymethylencopolymerisat angewandt. Ihre Anwendung kann in recht unterschiedlicher Weise erfolgen. So kann man sie, wie dies beispielsweise auch mit Gleitmitteln oder Farbpigmenten praktiziert wird, auf die Oberfläche von Formmassen-Granulat aufbringen. Die Gefahr der Entmischung beim Transport wird verringert, wenn hierbei sogenannte Haftöle (z.B. Mineral- oder Siliconöle) mitverwendet werden. Um eine mögliche Entmischung ganz auszuschließen und den zusätzlichen Arbeitsgang zu vermeiden, wird man jedoch das Einarbeiten in die Oxymethylencopolymerisatschmelze bevorzugen. Man kann die Formaldehyd bindenden Substanzen allein oder im Gemisch z.B. mit anderen Additiven an einer geeigneten Stelle in die Kompoundiermaschine dosieren und dort in das geschmolzene Oxymethylencopolymerisat einarbeiten. Es ist aber auch möglich, die Formaldehyd bindenden Substanzen zusammen mit Stabilisatoren und gegebenenfalls weiteren Additiven zuerst in einem Pulvermischer mit dem Oxymethylencopolymerisat zu mischen und die Mischung anschließend in einer Kompoundiermaschine aufzuschmelzen und zu homogenisieren. Als Kompoundiermaschinen sind Zweischneckenextruder besonders geeignet. Es hat sich gezeigt, daß die Formaldehyd bindenden Substanzen auch dann wirksam bleiben, wenn man sie einem rohen Oxymethylencopolymerisat zusetzt, das noch abspaltbaren Formaldehyd enthält, und das Gemisch in einem Entgasungsextruder homogenisiert und entgast. Das ist überraschend, denn man mußte eigentlich damit rechnen, daß der im Extruder abgespaltene Formaldehyd mit den Formaldehyd bindenden Substanzen reagieren und diese dadurch unwirksam machen würde.

Die Substanzen der Formeln (I), (II) und (III), mit denen besonders gute Ergebnisse erzielt werden, lassen sich beispielsweise so herstellen, daß man 2-Chlor-4,6-diamino-1,3,5-triazin, zweckmäßigerweise in Gegenwart eines Säureacceptors, mit entsprechenden zwei- oder mehrwertigen Aminen umsetzt. Als solche Amine können zum Beispiel eingesetzt werden:
1,2-Diaminoethan, 1,4-Diaminobutan, 1,6-Diaminohexan, 1,10-Diaminodecan, 1,12-Diaminododecan, Diethylentriamin, Triethylentetramin, Tetraethylenpentamin, 1,2-Butandiamin, 1,2-Propandiamin, 3,3'-Biphenyldiamin, 1,2-Bis(cyclohexylamino)-ethan, 1,2-Bis(phenylamino)-ethan, 1,2-Bis(benzylamino)-ethan, 1,2-Bis(methylamino)-ethan, 1,2-Bis(tolylamino)-ethan, 1,2-Bis(allylamino)-ethan, 1,3-Bis(naphthylamino)-propan, 1,3-Bis(xylylamino)-propan, 1,4-Bis(phenylamino)-butan, 1,4-Bis(phenylethylamino)-butan, 1,3,5-Triaminopentan, 1,3,5-Tris(phenylamino)-pentan, 1,3,5-Tris(decylamino)-pentan, 1,3,5,7-Tetraaminoheptan, 1,3,5,7-Tetrakis(tolylamino)-heptan, 1,3,5,7,9-Pentaaminononan, 1,3,5,7,9-Pentakis(ethylamino)-nonan, 1,4-Diamino-2-buten, 3,4-Diamino-1-buten, 3,4-Diamino-1-penten, 1,4-Diamino-2-penten, 5,6-Diamino-1-hexen, 2,4-Diaminotoluol, 1,8-Diaminonaphthalin, Bis(4-aminophenyl)-methan, Bis(4-aminophenyl)-sulfon, Bis(4-aminophenyl)-ether, 1,3-Bis(aminomethyl)-cyclohexan, 3-Aminomethyl-3,5,5-trimethylcyclohexylamin, 1,3-Bis(aminomethyl)-benzol, Bis(4-aminocyclohexyl)-methan, Bis(3-aminopropyl)-amin, N,N'-Bis(3-aminopropyl)-ethylendiamin oder N,N'-Bis(3-aminopropyl)-butandiamin(1,4).

Die Substanzen der Formel (IV) lassen sich beispielsweise so herstellen, daß man Dicyandiamid in Dimethylsulfoxid als Lösungmittel und in Gegenwart eines Alkalimetallalkoholats mit entsprechenden Dinitrilen umsetzt. Als Dinitrile können zum Beispiel eingesetzt werden:
Malonsäure-dinitril, Propylmalonsäure-dinitril, Bernsteinsäure-dinitril, 2,2-Dimethyl-bernsteinsäure-dinitril, Glutarsäure-dinitril, 2-Methylglutarsäure-dinitril, Adipinsäure-dinitril, Pimelinsäure-dinitril, Korksäure-dinitril, Azelainsäure-dinitril, Sebacinsäure-dinitril, 5,8-Dimethyl-dodecandicarbonsäure-1,12-dinitril, Phthalodinitril, Isophthalodinitril, Terephthalodinitril, Cyclohexan-1,2-dicarbonitril, Cyclohexan-1,4-dicarbonitril.

Die Oxymethylencopolymerisate in den erfindungsgemäßen Formmassen enthalten im allgemeinen 90 bis 99,9 Molprozent Oxymethylen- und 10 bis 0,1 Molprozent Comonomereinheiten, vorzugsweise 97 bis 99,5 Molprozent Oxymethylen- und 3 bis 0,5 Molprozent Comonomereinheiten. Die Comonomereinheiten haben vorzugsweise folgende Struktur:

$$-[-CH_2(CHR)_y-O-]_z-$$

In dieser Formel stellt R ein Wasserstoffatom dar oder einen Alkylrest mit 1 bis 6, vorzugsweise 1 bis 3 Kohlenstoffatomen, einen Alkoxymethylrest mit 2 bis 6, vorzugsweise 2 bis 4 Kohlenstoffatomen, einen Phenylrest oder einen Phenoxymethylrest. y bedeutet eine ganze Zahl von 1 bis 5, wobei z gleich 1 ist. Webb y gleich 1 ist und R ein Wasserstoffatom darstellt, kann z 2 oder 3 sein. Die Oxymethylencopolymerisate haben vorzugsweise Hydroxyl- oder Alkoxyendgruppen. Sie können in üblicher Weise durch Copolymerisation von Formaldehyd oder Trioxan mit geeigneten copolymerisierbaren Verbindungen, vorzugsweise cyclischen Ethern oder cyclischen Acetalen hergestellt werden oder durch nachträgliche Umsetzung von Polyoxymethylenen mit entsprechenden Comonomeren. Die Oxymethylencopolymerisate können linear oder verzweigt sein.

Die erfindungsgemäßen Formmassen müssen in jedem Fall mindestens ein Antioxidans enthalten. Dessen Menge liegt zweckmäßigerweise zwischen 0,1 und 10 Gewichtsteilen auf 1000 Gewichtsteile Oxymethylencopolymerisat. Von den an sich bekannten Antioxantien sind die nachfolgend aufgeführten phenolischen Verbindungen besonders gut geeignet:
N,N'-Bis-3-(3',5'-di-tert.-butyl-4'-hydroxyphenyl)-propionylhydrazin, 1,6-Hexandiol-bis-3-(3',5'-di-tert.-butyl-4'-hydroxyphenyl)-propionat, 3,6-Dioxaoctan-1,8-diol-bis-3-[3'-tert.-butyl-4'-hydroxy-5'-(methylphenyl)]-propionat, N,N'-Hexamethylen-bis-3-(3',5'-di-tert.-butyl-4'-hydroxyphenyl)-propionamid, Tetrakis-[methylen-3-(3',5'-di-tert.-butyl-4'-hydroxyphenyl)-propionyl)]-methan und 1,3,5-Trimethyl-2,4,6-tris-(3',5'-di-tert.-butyl-4'-hydroxybenzyl)-benzol.

Als weitere Komponenten können die erfindungsgemäßen Formmassen Wärmestabilisatoren, UV-Absorber, Lichtschutzmittel, Gleitmittel, Antistatika, Nukleierungsmittel, Säureacceptoren, Füllstoffe, Farbpigmente, Elastomere und andere für Polyoxymethylen-Formmassen gebräuchliche Zusätze enthalten.

Die Überlegenheit der erfindungsgemäßen Formmassen aufgrund verminderter Formaldehyd-Emission beim thermoplastischen Verformen wird in den nachfolgenden Beispielen und Vergleichsversuchen deutlich gemacht. Die Messung des freigesetzten Formaldehyds erfolgte mit dem "Lion Formaldemeter" der Wilko GmbH, das eine Brennstoffzelle als Detektor enthält. Das Gerät hat einen Meßbereich von 0,1 bis 99,9 ppm, im Bereich von 0,3 bis 10 ppm beträgt die Genauigkeit ± 5 %. Um im unteren Meßbereich arbeiten zu können, wurde nicht der gesamte beim thermoplastischen Verformen freigesetzte Formaldehyd gemessen. Die in den Beispielen und Vergleichsversuchen angegebenen Formaldehydkonzentrationen sind vielmehr Relativwerte.

Beispiel 1:

1000 Gewichtsteile einer handelsüblichen, ein phenolisches Antioxidans enthaltenden, Formmasse aus einem Oxymethylencopolymerisat mit 99 Molprozent Oxymethylen- und 1 Molprozent Oxybutylen-Einheiten und 1 Gewichtsteil N,N'-Bis-(diamino-1,3,5-triazin-2-yl)-ethylendiamin (A) wurden in einem Pulvermischer gemischt. Die Mischung wurde dann auf einer Spritzgußmaschine des Typs Stübbe 65 S zu Formteilen verarbeitet, die aus 2 rechteckigen Plättchen mit den Abmessungen 62 x 78 mm und 2 bzw. 3 mm Dicke bestanden. Das Schußgewicht (Plättchen und Anguß) betrug 40 g. Die Spritbedingungen waren wie folgt:

| | |
|---|---|
| Düsendurchmesser | 2 mm |
| Zylindertemperatur | 195°C |
| Formtemperatur | 90°C |
| Einspritzdruck | 760 bar |
| Nachdruck | 760 bar |
| Einspritzzeit | 7 Sekunden |
| Zykluszeit | 83 Sekunden |

Das ausgeworfene Formteil wurde zunächst 120 Sekunden in Laboratmosphäre und danach in einem zylindrischen Behälter von 12 cm Durchmesser und 24 cm Höhe abgekühlt. Der Behälter wurde sofort nach Einlegen des Formteils verschlossen und zur gleichmäßigen Verteilung des emittierten Formaldehyds nach 30 und 45 Sekunden jeweils ca. 5 Sekunden lang geschüttelt. Nach 60 Sekunden wurde das Ansaugröhrchen des Meßgerätes durch eine bis dahin verschlossene, genau passende Öffnung des Behälters gesteckt und der Formaldehydgehalt der Atmosphäre im Behälter gemessen. Die Messung wurde an zwei weiteren Formteilen nach vorherigem Ausblasen des Behälters mit Preßluft und Bestimmen eines Blindwertes wiederholt. Die Formaldehydkonzentration betrug 3 ppm.

Beispiel 2:

1000 Gewichtsteile einer handelsüblichen, ein phenolisches Antioxidans enthaltenden, Formmasse aus einem Oxymethylencopolymeren mit 99 Molprozent Oxymethylen- und 1 Molprozent Oxybutylen-Einheiten wurden mit 1 Gewichtsteil N,N'-Bis-(diamino-1,3,5-triazin-2-yl)-1,12-diaminododecan (B) gemischt und dann thermoplastisch verformt. Das Mischen, Spritzgießen und Bestimmen des emittierten Formaldehyds erfolgten auf die im Beispiel 1 näher beschriebene Weise. Es wurden 5 ppm Formaldehyd gemessen.

Vergleichsversuch 1:

Die in den Beispielen 1 und 3 verwendete Formmasse wurde ohne Zusätze thermoplastisch verformt. Das Spritzgießen und Bestimmen des emittierten Formaldehyds erfolgten auf die im Beispiel 1 näher beschriebene Weise. Es wurden 15 ppm Formaldehyd gemessen.

Die Ergebnisse aus den Beispielen 1 und 2 dem Vergleichsversuch 1 sind in der folgenden Tabelle 1 zusammengestellt:

Tabelle 1

| Beispiel Nr. | Zusatz Gewichtsteile pro 1000 Gewichtsteile Formmasse | Formaldehyd-Emission (relativ) ppm | Formaldehyd-Emission bezogen auf Vergleichsversuch 1 % |
|---|---|---|---|
| 1 | 1 (A) | 3 | 20 |
| 2 | 1 (B) | 5 | 33 |
| Vergleichsversuch 1 | ohne | 15 | |

Beispiel 3:

1000 Gewichtsteile eine handelsüblichen, ein phenolisches Antioxidans enthaltenden, Formmasse aus einem Oxymethylencopolymeren mit 99 Molprozent Oxymethylen- und 1 Molprozent Oxybutylen-Einheiten wurden in einem Fluidmischer mit 1 Gewichtsteil N,N'-Bis-(diamino-1,3,5-triazin-2-yl)-ethylendiamin (A) gemischt. Die Mischung wurde dann auf einer Spritzgußmaschine des Typs Arburg Allrounder 200 S zu Probekörpern nach DIN 53455, Nr. 3 mit 4 mm Dicke verarbeitet. Pro Schuß wurden 2 Probekörper gespritzt, das Schußgewicht betrug einschließlich Anguß 30 g. Die Spritzbedingungen waren wie folgt:

| | |
|---|---|
| Zylindertemperatur | 190°C |
| Formtemperatur | 90°C |
| Düsendurchmesser | 2,5 mm |
| Einspritzdruck | 840 bar |
| Nachdruck | 840 bar |
| Staudruck | 140 bar |
| Zykluszeit | 76 Sekunden |
| Einspritzzeit | 2,4 Sekunden |

Das ausgeworfene Formteil wurde zunächst 90 Sekunden in Laboratmosphäre und danach in einem zylindrischen Behälter von 12 cm Durchmesser und 24 cm Höhe abgekühlt. Der Behälter wurde sofort nach Einlegen des Formteils verschlossen und zur gleichmäßigen Verteilung des emittierten Formaldehyds nach 45 und 75 Sekunden jeweils ca. 5 Sekunden lang geschüttelt. Nach 90 Sekunden wurde das Ansaugröhrchen des Meßgerätes durch eine bis dahin verschlossene, genau passende Öffnung des Behälters gesteckt und der Formaldehydgehalt der Atmosphäre im Behälter gemessen.

Die Messung wurde an zwei weiteren Formteilen wiederholt. Vor jeder Messung wurde nach Ausblasen des Behälters mit Preßluft ein Blindwert bestimmt. Die Formaldehydkonzentration betrug 5 ppm.

Beispiel 4:

1000 Gewichtsteile einer handelsüblichen, ein phenolisches Antioxidans enthaltenden, Formmasse aus einem Oxymethylencopolymeren mit 99 Molprozent Oxymethylen- und 1 Molprozent Oxybutylen-Einheiten wurden mit 1 Gewichtsteil N,N'-Bis-(diamino-1,3,5-triazin-2-yl)-1,6-diaminohexan (C) gemischt und dann thermoplastisch verformt. Das Mischen, Spritzgießen und Bestimmen des emittierten Formaldehyds erfolgten auf die im Beispiel 3 näher beschriebene Weise. Die Formaldehydkonzentration betrug 6 ppm.

Beispiel 5:

1000 Gewichtsteile einer handelsüblichen, ein phenolisches Antioxidans enthaltenden, Formmasse aus einem Oxymethylencopolymeren mit 99 Molprozent Oxymethylen- und 1 Molprozent Oxybutylen-Einheiten wurden mit 1 Gewichtsteil 1,3-Bis-(diamino-1,3,5-triazin-2-yl)-benzol (D) gemischt und dann thermoplastisch verformt. Das Mischen, Spritzgießen und Bestimmen des emittierten Formaldehyds erfolgten auf die im Beispiel 3 näher beschriebene Weise. Die Formaldehydkonzentration betrug 11 ppm.

Vergleichsversuch 2:

Die in den Beispielen 3, 4 und 5 verwendete Formmasse wurde ohne Zusätze thermoplastisch verformt. Das Spritzgießen und Bestimmen des emittierten Formaldehyds erfolgten auf die im Beispiel 3 näher beschriebene Weise. Die Formaldehydkonzentration betrug 16 ppm.

Die Ergebnisse aus den Beispielen 3 bis 5 und dem Vergleichsversuch 2 sind in der folgenden Tabelle 2 zusammengestellt:

Tabelle 2:

| Beispiel Nr. | Zusatz Gewichtsteile pro 1000 Gewichtsteile Formasse | Formaldehyd-Emission (relativ) ppm | Formaldehyd-Emission bezogen auf Vergleichsversuch 2 % |
|---|---|---|---|
| 3 | 1 (A) | 5 | 31 |
| 4 | 1 (C) | 6 | 38 |
| 5 | 1 (D) | 11 | 69 |
| Vergleichsversuch 2 | ohne | 16 | |

Die Formaldehyd bindenden Zusätze können bereits in einer früheren Verfahrensstufe der Formmassen-Herstellung eingemischt werden. In den nachfolgenden Beispielen 6 bis 10 wurden die Formaldehyd bindenden Stoffe zusammen mit einem phenolischen Antioxidans einem rohen Trioxan-Copolymerisat zugesetzt und bei der anschließenden Entgasungsextrusion gleichmäßig darin verteilt.

Herstellung des Copolymerisats:

Ein Gemisch aus 2500 Gewichtsteilen Trioxan, 69 Gewichtsteilen 1,3-Dioxepan und 2 Gewichtsteilen Dibutylformal wurde in einem offenen Gefäß bei einer Starttemperatur von 80°C durch Zusatz von 15 ml einer t-Butylperchlorat-Lösung in 1,2-Dimethoxyethan (0,1 g/l) polymerisiert. 5 Minuten nach Zugabe des Initiators wurde der ca. 5 cm dicke Polymerblock grob zerkleinert und dann unter Überleiten von gasförmigem Ammoniak (ca. 50 ppm, bezogen auf das Polymerisat) auf eine Korngröße von 1 bis 3 mm gemahlen. Das Rohpolymerisat enthielt noch 5,3 % nicht umgesetztes Trioxan und 3,1 % thermisch instabile Anteile.

Beispiel 6:

1000 Gewichtsteile Rohpolymerisat, 3 Gewichtsteile Hexandiol-bis-3-(3',5'-di-tert.-butyl-4'-hydroxyphenyl)-propionat und 2 Gewichtsteile N,N'-Bis-(diamino-1,3,5-triazin-2-yl)-ethylendiamin (A) wurden in einem Fluidmischer gemischt und dann in einem Extruder (ZDS-K 28 der Firma Werner & Pfleiderer) mit drei Vakuumzonen bei 250°C Zylindertemperatur, einer Drehzahl von 150 UpM und 0,96 bar Unterdruck aufgeschmolzen und entgast. Das Produkt wurde als Strang abgezogen, in einem Wasserbad verfestigt, granuliert und dann 3 Stunden bei 120°C getrocknet. Die Spritzgußverarbeitung und die Bestimmung des dabei emittierten Formaldehyds erfolgten nach der im Beispiel 3 näher beschriebenen Methode. Es wurden 5 ppm Formaldehyd gemessen. Zur Bestimmung der thermischen Stabilität wurde eine Granulatprobe 2 Stunden an der Luft auf 200°C erhitzt, wobei ein Gewichtsverlust von 0,8 % auftrat.

Beispiel 7:

1000 Gewichtsteile Rohpolymerisat, 3 Gewichtsteile Hexandiol-bis-3-(3',5'-di-tert.-butyl-4'-hydroxyphenyl)-propionat und 2 Gewichtsteile 1,4,7-Tris-(diamino-1,3,5-triazin-2-yl)-diethylentriamin (E) wurden in gleicher Weise wie im Beispiel 6 zu einer granulierten Formmasse verarbeitet. Das Spritzgießen und die Bestimmung des hierbei emittierten Formaldehyds erfolgten wieder nach der im Beispiel 3 näher beschriebenen Methode. Es wurden 8 ppm Formaldehyd gemessen. Zur Bestimmung der thermischen Stabilität wurde eine Granulatprobe 2 Stunden an der Luft auf 220°C erhitzt, wobei ein Gewichtsverlust von 1,0 % auftrat.

Beispiel 8:

1000 Gewichtsteile Rohpolymerisat, 3 Gewichtsteile Hexandiol-bis-3-(3',5'-di-tert.-butyl-4'-hydroxyphenyl)-propionat und 0,5 Gewichtsteile 1,4-Bis-(diamino-1,3,5-triazin-2-yl)-piperazin (F) wurden in gleicher Weise wie im Beispiel 6 zu einer granulierten Formmasse verarbeitet. Das Spritzgießen und die Bestimmung des hierbei emittierten Formaldehyds erfolgten wieder nach der im Beispiel 3 näher beschriebenen Methode. Es wurden 9 ppm Formaldehyd gemessen. Zur bestimmung der thermischen Stabilität wurde eine Granulatprobe 2 Stunden an der Luft auf 220°C erhitzt, wobei ein Gewichtsverlust von 1,0 % auftrat.

Beispiel 9:

1000 Gewichtsteile Rohpolymerisat, 3 Gewichtsteile Hexandiol-bis-3-(3',5'-di-tert.-butyl-4'-hydroxyphenyl)-propionat und 5 Gewichtsteile 1,4-Bis-(diamino-1,3,5-triazin-2-yl)-piperazin (F) wurden in gleicher Weise wie im Beispiel 6 zu einer granulierten Formmasse verarbeitet. Das Spritzgießen und die Bestimmung des hierbei emittierten Formaldehyds erfolgten wieder nach der im Beispiel 3 näher beschriebenen Methode. Es wurden 3 ppm Formaldehyd gemessen. Zur Bestimmung der thermischen Stabilität wurde eine Granulatprobe 2 Stunden an der Luft auf 220°C erhitzt, wobei ein Gewichtsverlust von 1,1 % auftrat.

Beispiel 10:

1000 Gewichtsteile Rohpolymerisat, 3 Gewichtsteile Hexandiol-bis-3-(3',5'-di-tert.-butyl-4'-hydroxyphenyl)-propionat und 2 Gewichtsteile 1,10-Bis-(diamino-1,3,5-triazin-2-yl)-decan (G) wurden in gleicher Weise wie im Beispiel 6 zu einer granulierten Formmasse verarbeitet. Das Spritzgießen und die Bestimmung des hierbei emittierten Formaldehyds erfolgten wieder nach der im Beispiel 3 näher beschriebenen Methode. Es wurden 10 ppm Formaldehyd gemessen. Zur Bestimmung der thermischen Stabilität wurde eine Granulatprobe 2 Stunden an der Luft auf 220°C erhitzt, wobei ein Gewichtsverlust von 1,7 % auftrat.

Vergleichsversuch 3:

1000 Gewichtsteile Rohpolymerisat und 3 Gewichtsteile Hexandiol-bis-3-(3',5'-di-tert.-butyl-4'-hydroxyphenyl)-propionat wurden in gleicher Weise wie im Beispiel 6 zu einer granulierten Formmasse verarbeitet. Das Spritzgießen und die Bestimmung des hierbei emittierten Formaldehyds erfolgten wieder nach der im Beispiel 3 näher beschriebenen Methode. Es wurden 18 ppm Formaldehyd gemessen. Zur Bestimmung der thermischen Stabilität wurde eine Granulatprobe 2 Stunden an der Luft auf 220°C erhitzt, wobei ein Gewichtsverlust von 2,2 % auftrat.

Die Ergebnisse aus den Beispielen 6 bis 10 und dem Vergleichsversuch 3 sind in der folgenden Tabelle 3 zusammengestellt:

Tabelle 3:

| Beispiel Nr. | Zusatz Gewichtsteile pro 1000 Gewichtsteile Rohpolymerisat* | Formaldehyd-Emission (relativ) ppm | Formaldehyd-Emission bezogen auf Vergleichsversuch 3 % | Gewichtsverlust nach 2 Stunden/220 °C % |
|---|---|---|---|---|
| 6 | 2 (A) | 5 | 28 | 0,8 |
| 7 | 2 (E) | 8 | 44 | 1,0 |
| 8 | 0,5 (F) | 9 | 50 | 1,0 |
| 9 | 5 (F) | 3 | 17 | 1,1 |
| 10 | 2 (G) | 10 | 56 | 1,7 |
| Vergleichsversuch 3 | ohne | 18 | | 2,2 |

* zusätzlich zu 3 Gewichtsteilen Antioxidans

## Patentansprüche

1. Ein Antioxidans enthaltende Oxymethylencopolymerisat-Formmassen mit verminderter Formaldehyd-Emission bei der thermoplastischen Verarbeitung, dadurch gekennzeichnet, daß sie zusätzlich an der Oberfläche oder homogen eingemischt mindestens eine Formaldehyd bindende Substanz der Formel

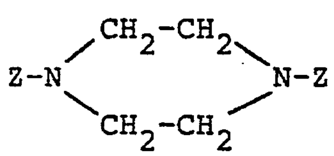 (I),

$$Z\text{-}NR\text{-}R'(NRZ)_n\text{-}RN\text{-}Z \qquad \text{(II)},$$

$$Z\text{-}NR\text{-}R''[N(Z)\text{-}R'']_{\sigma}[R'']_{\rho}\text{-}RN\text{-}Z \qquad \text{(III) oder}$$

$$Z\text{-}R'''\text{-}Z \qquad \text{(IV)}$$

enthalten, in denen
Z einen 4,6-Diamino-1,3,5-triazin-2-ylrest,
R Wasserstoff oder einen bis zu 18 Kohlenstoffatome aufweisenden einwertigen gesättigten oder ungesättigten, geradkettigen oder verzweigten aliphatischen Kohlenwasserstoffrest oder einwertigen unsubstituierten oder ein- oder mehrfach durch einen aliphatischen Kohlenwasserstoffrest substituierten cycloaliphatischen oder aromatischen Kohlenwasserstoffrest,
R' einen bis zu 18 Kohlenstoffatome aufweisenden zwei- bis fünfwertigen gesättigten oder ungesättigten, geradkettigen oder verzweigten aliphatischen Kohlenwasserstoffrest oder zwei- bis fünfwertigen unsubstituierten oder ein- oder mehrfach durch einen aliphatischen Kohlenwasserstoffrest substituierten cycloaliphatischen oder aromatischen Kohlenwasserstoffrest, einen bis zu 18 Kohlenstoffatome aufweisenden zweiwertigen aliphatisch-cycloaliphatischen oder aliphatisch-aromatischen Kohlenwasserstoffrest mit der Struktur -A-B- oder -A-B-A-, in welcher A einen zweiwertigen aliphatischen und B eine zweiwertigen unsubstituierten oder ein- oder mehrfach durch einen aliphatischen Kohlenwasserstoffrest substituierten cycloaliphatischen oder aromatischen Kohlenwasserstoffrest darstellen, oder einen

bis zu 18 Kohlenstoffatome aufweisenden zwei- bis fünfwertigen Rest der Struktur -C-X-C-, in welcher C einen mindestens zweiwertigen cycloaliphatischen oder aromatischen Kohlenwasserstoffrest und X einen zweiwertigen geradkettigen oder verzweigten aliphatischen Kohlenwasserstoffrest, -O-, -S- oder $-SO_2-$ darstellen,
R" einen bis zu 6 Kohlenstoffatome aufweisenden zweiwertigen geradkettigen oder verzweigten aliphatischen Kohlenwasserstoffrest,
R'" einen bis zu 12 Kohlenstoffatome aufweisenden zweiwertigen geradkettigen oder verzweigten aliphatischen Kohlenwasserstoffrest oder zweiwertigen cycloaliphatischen oder aromatischen Kohlenwasserstoffrest,
n 0, 1, 2 oder 3,
σ 1, 2 oder 3 und
ρ 0 oder 1
bedeuten.

2. Oxymethylencopolymerisat-Formmassen nach Anspruch 1, dadurch gekennzeichnet, daß die Formaldehyd bindende Substanz in einer Menge zwischen 0,2 und 50 Gewichtsteilen auf 1000 Gewichtsteile Oxymethylencopolymerisat angewandt wird.

## Claims

1. Thermoplastic oxymethylene copolymer moulding compounds containing an antioxidant which show reduced formaldehyde emission during processing, characterized in that they additionally contain at least one formaldehyde-binding substance corresponding to the following formulae

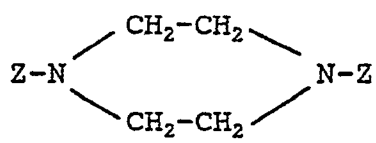
(I)

$$Z-NR-R'(NRZ)_n-RN-Z \qquad (II)$$

$$Z-NR-R''[N(Z)-R'']_{\sigma}[R'']_{\rho}-RN-Z \qquad (III)$$ or

$$Z-R'''-Z \qquad (IV)$$

at the surface or homogeneously mixed in; in the above formulae,
Z is a 4,6-diamino-1,3,5-triazin-2-yl group,
R is hydrogen or an up to $C_{18}$ monofunctional, saturated or unsaturated, linear or branched aliphatic hydrocarbon radical or monofunctional, cycloaliphatic or aromatic hydrocarbon radical which is either unsubstituted or substituted one or more times by an aliphatic hydrocarbon radical,
R′ is an up to $C_{18}$ difunctional to pentafunctional, saturated or unsaturated, linear or branched aliphatic hydrocarbon radical or difunctional to pentafunctional, cycloaliphatic or aromatic hydrocarbon radical which is either unsubstituted or substituted one or more times by an aliphatic hydrocarbon radical, an up to $C_{18}$ difunctional aliphatic-cycloaliphatic or aliphatic-aromatic hydrocarbon radical having the structure –A–B– or –A–B–A–, in which A is an difunctional aliphatic hydrocarbon radical and B is a difunctional cycloaliphatic or aromatic hydrocarbon radical which may be unsubstituted or substituted one or more times by an aliphatic hydrocarbon radical or an up to $C_{18}$ difunctional to pentafunctional radical having the structure –C–X–C, in which C is an at least difunctional cycloaliphatic or aromatic hydrocarbon radical and X is a difunctional, linear or branched aliphatic hydrocarbon radical, –O–, –S– or $-SO_2-$,
R″ is a difunctional, linear or branched aliphatic hydrocarbon radical containing up to 6 carbon atoms,
R‴ is a difunctional, linear or branched aliphatic hydrocarbon radical containing up to 12 carbon atoms or a difunctional cycloaliphatic or aromatic hydrocarbon radical,
n is 0, 1, 2 or 3,
σ is 12, 2 or 3 and
ρ is 0 or 1.

2. Oxymethylene copolymer moulding compounds as claimed in claim 1, characterized in that the formaldehyde-binding substance is used in a quantity of 0.2 to 50 parts by weight to 1000 parts by weight oxymethylene copolymer.

**Revendications**

1. Matières à mouler à base de copolymère d'oxyméthylène, contenant un antioxydant, à émission réduite de formaldéhyde lors du traitement thermoplastique, caractérisées en ce qu'elles contiennent en outre, incorporée à la surface ou de façon homogène, au moins une substance fixant le formaldéhyde, de formules:

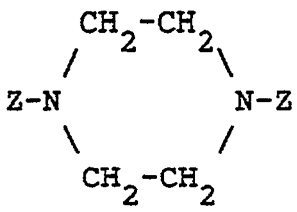

(I)

$Z{-}NR{-}R'(NRZ)_n{-}RN{-}Z$ (II)

$Z{-}NR{-}R''{-}[N(Z){-}R'']_{\sigma}{-}[R'']_{\rho}{-}RN{-}Z$ (III) ou

$Z{-}R'''{-}Z$

dans lesquelles:
Z = représente un radical 4,6-diamino-1,3,5-triazine-2-yle,
R = représente un atome d'hydrogène ou un radical hydrocarboné monovalent aliphatique, à chaîne droite ou ramifié, saturé ou non saturé, comportant jusqu'à 18 atomes de carbone, ou un radical hydrocarboné monovalent cycloaliphatique ou aromatique
non substitué ou substitué une ou plusieurs fois par un reste hydrocarboné aliphatique,
R′ = représente un reste hydrocarboné aliphatique à chaîne droite ou ramifiée, saturé ou non saturé, bivalent à pentavalent, comportant jusqu'à 18 atomes de carbone, ou un radical hydrocarboné aromatique ou cycloaliphatique bivalent à pentavalent
non substitué ou substitué une ou plusieurs fois par un reste hydrocarboné aliphatique, un radical hydrocarboné aliphatique-cycloaliphatique ou aliphatique-aromatique bivalent comportant jusqu'à 18 atomes de carbone, ayant la structure –A–B– ou –A–B–A–, dans laquelle A représente un reste hydrocarboné cycloaliphatique ou aromatique bivalent non substitué ou substitué une ou plusieurs fois par un groupe hydrocarboné aliphatique, ou un radical bivalent à pentavalent comportant jusqu'à 18 atomes de carbone, de structure –C–X–C–, dans laquelle C représente un radical hydrocarboné cycloaliphatique ou aromatique au moins bivalent, et X représente un radical hydrocarboné aliphatique bivalent à chaîne droite ou ramifiée, –O–, –S– ou $-SO_2-$;
R″ = représente un radical hydrocarboné aliphatique bivalent à chaîne droite ou ramifiée, comportant jusqu'à 6 atomes de carbone;
R‴ = représente un radical hydrocarboné aliphatique bivalent à chaîne droite ou ramifiée, comportant jusqu'à 12 atomes de carbone, ou un radical cycloaliphatique ou aromatique bivalent;
n = est 0, 1, 2 ou 3;
σ = est 1, 2 ou 3 et;
ρ = est 0 ou 1.

2. Matières à mouler à base de copolymère d'oxyméthylène selon la revendication 1, caractérisées en ce que la substance fixant le formaldéhyde est utilisée en une quantité comprise entre 0,2 et 50 parties en poids, pour 1000 parties en poids de copolymère d'oxyméthylène.